# EUROPEAN PATENT SPECIFICATION

(11) **EP 2 651 059 B1**
(45) Date of publication and mention of the grant of the patent: **28.06.2017**
(21) Application number: 12163531.2
(22) Date of filing: 10.04.2012
(51) Int. Cl.: H04J 14/02

(54) **Add device and drop device for an optical network element**
Add- und Drop-Vorrichtung für ein optisches Netzwerkelement
Dispositif pour ajouter/glisser un élément de réseau optique

(43) Date of publication of application: 16.10.2013
(73) Proprietor: ALCATEL LUCENT, 92100 Boulogne-Billancourt (FR)
(72) Inventor: Zami, Thierry, 91620 Nozay (FR); Balmefrezol, Elodie, 91620 Nozay (FR)
(74) Representative: Berthier, Karine

(56) References cited:
- WO-A1-2011/003247
- US-A1- 2009 232 497
- SIMMONS J M ET AL: "Optical crossconnects of reduced complexity for WDM networks with bidirectional symmetry", IEEE PHOTONICS TECHNOLOGY LETTERS, IEEE SERVICE CENTER, PISCATAWAY, NJ, US, vol. 10, no. 6, 1 June 1998 (1998-06-01), pages 819-821, XP011425636, ISSN: 1041-1135, DOI: 10.1109/68.681496

## Description

### Field of the invention

The invention relates to the technical field of Wavelength division multiplexing (WDM) for optical communication systems, in particular to optical add and drop devices suitable for transparent or semi transparent optical networks.

### Background

Mastery of optical fiber wavelength division multiplexing (WDM) transmission technology is a major factor in meeting the increasing needs of data transfer rates in the transmission of information.

WDM allows the transport of multiple optical signals, which originate from transponders, on a common propagation medium, e.g. an optical fiber.

In an effort of constantly improving the spectral efficiency, transponder able to transmit up to 400 Gb/s or even 1 Tb/s are currently developed. For capacity beyond 200 Gb/s per channel, the approach of optical channels based on one wavelength channel, i.e. a single carrier, does not enable a satisfying compromise between the tolerance to the physical impairments (for instance ASE accumulation and non-linear effects) and the spectral efficiency. Therefore, transponders able to transmit up to 400 Gb/s or even 1 Tb/s are based on the concept of superchannels which consists in bundling several optical signals on a plurality of wavelength channels inside one superchannel which is optically transmitted as one entity through the network. Such a transponder in the form of a superchannel transmitter is described in "Experimental Demonstration of 400 Gb/S Multi-flow, Multi-rate, Multi-reach Optical Transmitter for Efficient Elastic Spectral Routing" by H. Takara et al.

EP-A-2453601 discloses a reconfigurable add/drop multiplexing device comprising colorless adding and dropping units. An optical transmitter transmits a single wavelength channel at a time and an optical receiver receives a single wavelength channel at a time.

### Summary

In an embodiment, the invention provides a multidirectional add-device for an optical network element, comprising:
a group of superchannel optical transmitters, a superchannel transmitter being adapted to transmit a superchannel comprising a plurality of optical signals on a plurality of wavelength channels,
a group of broadcasting units, each broadcasting unit comprising a WDM input connected to the WDM output of a respective superchannel transmitter, each broadcasting unit comprising at least two WDM outputs,
a plurality of Wavelength Selective Switches (WSS) operating as programmable multiplexers,
an optical switching matrix comprising a set of WDM input ports each connected to a respective output of a broadcasting unit and a set of WDM output ports connected to the WSSs,
each of said WSSs comprising a plurality of WDM inputs each connected to a respective output port of the optical switching matrix to receive at least one superchannel from the superchannel transmitters,
each WSS comprising a WDM output and being adapted to filter the at least one received superchannel so as to output a selected subset of the optical signals of the at least one superchannel.

According to embodiments, such device can comprise one or more of the features below.

In embodiments of the device, the WDM ports of the optical switching matrix are distributed on two sides, the optical switching matrix being adapted to generate connections between the ports of the first side and the ports of the second side, and the input ports are all located on the first side and the output ports are all located on the second side.

In embodiments of the device, the WDM ports of the optical switching matrix are distributed on two sides, the optical switching matrix being adapted to generate connections between the ports of the first side and the ports of the second side,
the first side comprises a first subset of the input ports and a first subset of the output ports,
the second side comprises a second subset of the input ports and a second subset of the output ports, and
the optical switching matrix generates connections between the first subset of the input ports and the second subset of the output ports, and between the second subset of the input ports and the first subset of the output ports.

In embodiments of the device, a first WDM output of each of the broadcasting units is connected to an input port of the first subset and a first WDM input of each WSS is connected to an output port of the first subset, and a second WDM output of each of the broadcasting unit is connected to an input port in the second subset and a second WDM input of each WSS is connected to an output port of the second subset.

In embodiments of the device, the number of WDM outputs of each of the broadcasting units connected to the first side is equal to the number of WDM outputs of said broadcasting units connected to the second side and the number of WDM inputs of each of the WSSs connected to the first side is equal to the number of WDM inputs of said WSSs connected to the second side.

In embodiments of the device, the optical switching matrix has a number of ports on each side smaller than 129.

In embodiments of the device, a broadcasting unit comprises a number of outputs which is smaller than the number of WSSs.

In embodiments of the device, a broadcasting unit comprises less than five WDM outputs.

In embodiments of the device, the broadcasting units are optical splitters.

In embodiments of the device, the optical signals of a superchannel are generated using a method selected in the group consisting of Orthogonal Frequency Division Multiplexing, Coherent Wavelength Division Multiplexing, Parallel Optical Arbitrary Waveform Generation and Nyquist-Wavelength Division Multiplexing.

In embodiments of the device, each WSS comprises a number of WDM inputs connected to respective output ports of the optical switching matrix which is smaller or equal to the number of superchannel transmitters in the group of superchannel transmitters.

In embodiments of the device, the number of superchannel optical transmitters is higher than the number of WDM inputs connected to the optical switching matrix of each WSS.

In embodiments, the invention also provides a network element comprising:
a plurality of WDM output lines,
an above mentioned add-device, and
a plurality of WDM add links each connecting a WSS of the add-device to a respective one of the output lines.

In embodiments, the invention also provides a multidirectional drop device for an optical network element, comprising:
a group of superchannel optical receivers, a superchannel receiver being adapted to receive a superchannel comprising a plurality of optical signals on a plurality of wavelength channels,
a group of coupling units, each superchannel receiver comprising a WDM input connected to the WDM output of a respective coupling unit, each coupling unit comprising at least two WDM inputs,
a plurality of WSSs operating as programmable demultiplexers, an optical switching matrix comprising a set of WDM output ports each connected to a respective input of a broadcasting unit and a set of WDM input ports connected to the WSSs,
each of said WSSs comprising a plurality of WDM outputs each connected to a respective input port of the optical switching matrix to transmit at least one optical signal to the superchannel receivers,
each WSS comprising a WDM input for receiving at least one superchannel comprising a plurality of optical signals on a plurality of wavelength channels, the WSS being adapted to filter the superchannel so as to output a selected subset of the optical signals at each of the WDM outputs of the WSS.

The invention originates from the observation that when using superchannel transmitters, having a large capacity, to transmit only an optical signal directed to only one destination node, the transmitting capacity of the superchannel transmitter may be underemployed if only a fraction of the capacity is needed by that destination node.

Therefore, an idea on which the invention is based consists in providing an add-device which combines individual signals intended to be transmitted to several different destination nodes so as to generate one superchannel signal transmitted by one superchannel transmitter, distributes the superchannel signal to Wavelength Selective Switches (WSS) connected to respective destination nodes and in which each WSS can select individual signals in the distributed superchannel signal so as to add the respective individual signals to the traffic intended for a respective destination node. In other words, an idea on which the invention is based consists in providing a superchannel transmitter that can dedicate simultaneously its transmitting resources to several paths each in the direction of a different destination node.

Aspects of the invention are based on the idea of avoiding distributing the superchannel to each possible destination node so as to reduce power consumption and optical spectrum utilization along the transmitting optical fibers.

Aspects of the invention are based on the idea of flexibly distributing the superchannels to the needed optical paths by using an optical switching matrix to route the superchannels.

Aspects of the invention are based on the idea of distributing the superchannels by using an optical switching matrix, having ports on two sides which may be interconnected, in an efficient manner by balancing the connected ports on each side of the switching matrix.

Aspects of the invention are based on the idea of providing a multidirectional and colorless device with low contention.

Another idea on which the invention is based is to provide a drop device in which superchannel receivers may dedicate their receiving resources to optical signals on several different wavelength channels sent from a plurality of sources nodes.

### Brief description of the drawings

These and other aspects of the invention will be apparent from and elucidated with reference to the embodiments described hereinafter, by way of example, with reference to the drawings.
Figure 1 is a schematic representation of a degree-3 optical switching node which comprises add-devices and drop devices.
Figure 2 is a schematic representation of an add-device that may be implemented in the optical switching node presented in figure 1.
Figures 3 is another embodiment of an add-device that may be implemented in the optical switching node presented in figure 1.

### Detailed description of the embodiments

In a transparent WDM optical network, WDM transparent optical switching nodes are connected by optical links to form a given topology. The term "transparent" is applied to a transmission system in which the signal remains optical without being converted into an electronic signal when passing through a network routing node. Transparency can exist in some or all of the switching nodes of an optical network.

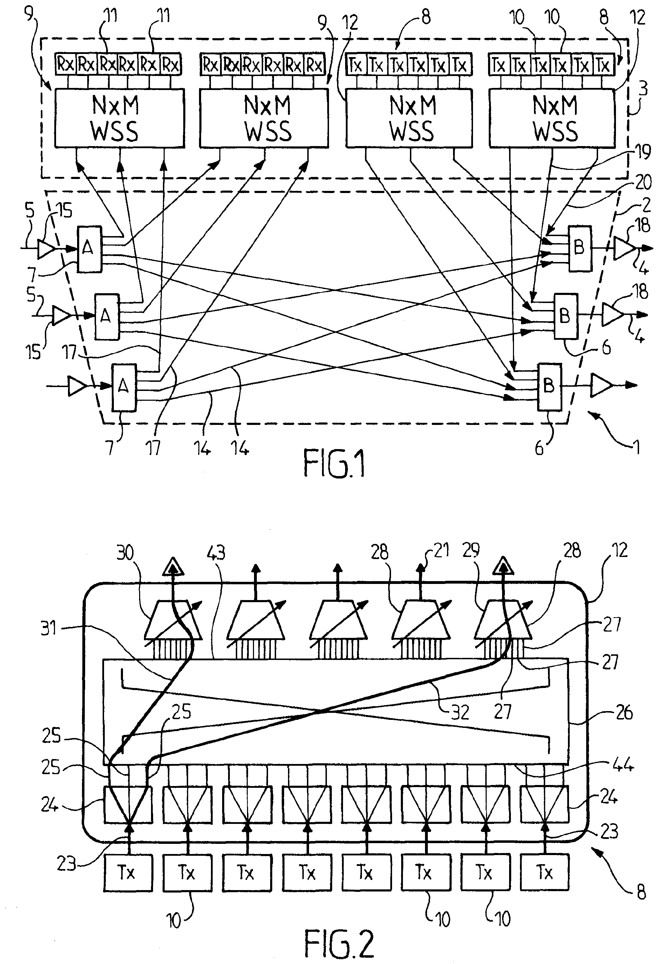

With reference to Figure 1, an optical transparent switching node 1 equipped with multidirectional drop devices 9 and multidirectional add-devices 8 will now be described.

The optical node 1 has a degree-3 connectivity. Namely it has three WDM input lines 5 and three WDM output lines 4 and can be connected with three respective neighboring nodes in a transparent network. The optical node 1 can be used in a transparent network or transparent network island with any topology, e.g. mesh, ring, star, tree and others. The same type of architecture could be used for making an optical node with a different, higher or lower degree of connectivity.

As shown, each WDM input line 5 may comprise an optical amplifier 15 and each WDM output line 4 may comprise an optical amplifier 18 to compensate for the losses of the node 1 components.

Each input line 5 is connected to send the WDM traffic to a respective distributing component 7, that may be a power splitter or a WSS. Each output line 4 is connected to receive WDM traffic from a merging component 6, which may be a power coupler or a WSS. At least one of components 6 and 7 must be wavelength selective if signals having a same wavelength are used on several input lines 21, which is generally the case. Between the components A and B, a plurality of transit lines 14 are connected to pass transit traffic from any of the input lines 5 to any of the output lines 4, although it is ordinarily not necessary to provide a transit line between a pair of input and output lines that connect to a same neighboring node. The transit lines 14 and the components 6 and 7 form a transparent layer 2 of the optical transparent switching node 1.

In a preferred embodiment, the components 7 are power splitters whereas the components 6 are WSSs, an architecture known as broadcast-and-select. Typically, the filtering function of the WSSs 6 can have a broad spectral granularity to switch superchannels as a whole.

An Add/drop layer 3 comprises add-devices 8 and drop devices 9. Add-devices and drop devices refer to subsystems providing add and drop functions, i.e. a capability to make write-accesses and read-accesses to the WDM transparent layer 2.

In order to provide add functions, each add-device 8 comprises a set of superchannel transmitters 10. Similarly each drop device 9 comprises a set of receivers 11 in order to provide the drop functions.

A superchannel transmitter 10 is a component adapted to transmit a superchannel. A superchannel is an WDM signal comprising a set of optical signals which occupy different wavelength channels, i.e. spectral slots. The set of optical signals may occupy several hundred of Ghz and may be generated using Orthogonal Frequency Division Multiplexing (OFDM), Coherent Wavelength Division Multiplexing (Coh. WDM), Parallel Optical Arbitrary Waveform Generation (POAWG) or Nyquist-Wavelength Division Multiplexing. Therefore, the transmitter is a flexible muxponder capable of grooming different kinds of traffic and different throughputs from its client side. The transmitter should be equipped in terms of laser sources and modulators to emit the maximum capacity.

A superchannel transmitter is described in "Experimental Demonstration of 400 Gb/S Multi-flow, Multi-rate, Multi-reach Optical Transmitter for Efficient Elastic Spectral Routing" by H. Takara et al. and comprises multiple tunable light sources, two flexible modulators and a polarized multiplexer.

Each superchannel transmitters 10 can dedicate simultaneously its transmitting resources to several different WDM signals for different destination nodes.

Therefore, each superchannel transmitter 10 is connected to the input ports of a distribution component 12. Each distribution component 12 is connected to each of the merging component 6.

The distribution components 12 can spread outgoing superchannels from each one of the transmitters 10 so as to reach different output lines 4. Furthermore, the distribution component 12 is able to make a spectral selection within each superchannel for each output node direction.

As a consequence, if the superchannel transmitter 10 is a 1 Tb/s transmitter, the 1 Tb/s transmitter can be used to generate several WDM signals at the same time to different nodes provided that the sum of the capacities of all these connections does not exceed 1 Tb/s and provided that these WDM signals occupy no overlapping spectral bands. For instance, the 1 Tb/s transmitter can be used for one 300 Gb/s signals through a first output line 4, another 300 Gb/s connection through a second output line 4 and a third 250 Gb/s through a third output line 4.

With reference to figure 2, an optical add-device 8 that may be implemented in a 5-degree WDM optical network node having the same architecture as the optical node 1 will now be described.

The add-device 8 comprises optical transmitters 10, which are each adapted to generate a superchannel to provide the data from client devices, not shown, to the optical layer 2. The client devices refer to any system that interfaces with the WDM network to transmit information signals transported by the WDM network.

Each transmitter 10 generates a WDM signal which is transmitted through its output 23 to a 1x3 power coupler 24 connected so as to work as a power splitter. Each power coupler 24 distributes the optical power from its input port to the output ports 25 by generating three equal signals transmitted each one by one of the three coupler outputs ports 25.

In order to route the superchannel from the superchannel transmitters 10, an optical spatial switching matrix 26 (OSSM) is provided. The OSSM 26 comprises input port on the transmitter side 44 and output ports on the opposite side 43. The OSSM 26 is a configurable non-blocking space switch that can be configured to generate transparent optical paths between any of its input ports of one side and any of its output ports on the other side to pass colored, WDM optical signals or superchannel independently of the wavelength thereof, within a given spectral window of course. Each output port 25 of the couplers is connected to a respective input port of the OSSM 26. The OSSM 26 may be implemented with diverse technologies, e.g. MEMS-operated reflectors. Suitable MEMS-based OSSMs are available from manufacturers such as Polatis Inc. or CrossFiber Inc.

Not necessarily all output ports of the OSSM 26 are connected to a power coupler 25, as some ports can be kept unused, e.g. to allow future growth of the add-device 8 capacity.

The output ports 27 of the OSSM 26 are connected by optical lines to five 1x8 flexgrid WSSs 28. Each WSS 28 is connected to one output line 4. For instance, the WSS 29 is connected to a first output line 4 through line 20. Similarly, the WSS 30 is connected to a second output line 4 through line 19.

A WSS 28 refers to a piece of equipment that may be used as a reconfigurable multiplexer or a reconfigurable demultiplexer. When it is acting as a multiplexer, as WSSs 28 are, a plurality of selectable ports 27 serve as inputs, and a common port 21 serves as an output. The WSS comprises grating components capable of separating a WDM optical signal i.e. a superchannel received at an input port into a plurality of beams corresponding to non-overlapping wavelength channels, and light steering means capable of steering independently the optical beam corresponding to a respective wavelength channel either towards the output or towards an absorber. Thereby, the optical signals of the incoming superchannel can be switched individually, i.e. either passed to the common output or blocked. The same function is achieved for each superchannel at each input.

This piece of equipment thereby carries out a reconfigurable multiplexing function on wavelength channels whose optical frequencies may or may not be aligned with a predetermined frequency grid. It makes it possible to pass, from each input to the common output, one optical signal, multiple optical signals, or no optical signal, selected from among the superchannel received at the respective input.

The switching or steering of beams within the WSS is produced by spatial light manipulation organs, such as micromirrors activated by MEMS micro-actuators or liquid crystal cells. In addition to selecting the wavelength channels, these organs may be capable of adjusting the signal attenuation for each wavelength channel. In this manner, each WSS 28 serves to both select the optical signals that must be passed to a given output line 21 and to adjust their output power channel-by-channel towards the corresponding output line 21.

The width of the wavelength channels switched by the WSSs 28 depends on the design of the WSSs. In the currently preferred embodiment, the WSSs can provide an adaptable filtering function with adjustable spectral width. However, WSSs 28 have a fixed spectral width in an alternative embodiment.

Figure 2 illustrates further two distributed superchannels 31 and 32. The two distributed superchannels 31 and 32 originate from an initial superchannel transmitted from a same transmitter 10 and which is distributed by a power coupler 24. The initial superchannel comprises a first optical signal on one wavelength channel intended to be transmitted to a first node and a second optical signal on another wavelength channel intended to be transmitted to a second node. Therefore, each of the distributed superchannels 31 and 32 is respectively conveyed by the OSSM 26 to the WSSs 30 and 29. At the output of the OSSM 26, the distributed superchannels 31 and 32 still comprise both the first signal and the second signal. As the second signal is only intended to be transmitted to the second node, the WSS 30 crossed by the superchannel 31 blocks the first signal so as to transmit only the second signal from its output 21. Similarly, the WSS 29 crossed by the superchannel 32 blocks the second signal so as to transmit only the first signal from its output 21.

In figure 2, the add device 8 comprises eight transmitters 10 and five WSSs 28. Each transmitter 10 may produce an optical signal which needs to be transmitted to a same output line 4. Therefore, each WSS 28 is able to receive a signal from each transmitter 10. As a consequence, each WSS 28 comprises eight input ports connected each one to an output port of the OSSM 26. Therefore, forty output ports (8x5) of the OSSM are connected to the WSSs 28. On the transmitters side 44, 24 input ports of the OSSM are connected to the power couplers 25.

The distribution of the superchannel induces a power loss between each superchannel distributed by the power coupler 24 and the superchannel received by the power coupler 24. The power loss increases as a function of the number of output ports 25 of a power coupler 24.

If the number of output ports 25 of the power couplers 24 is greater than or equal to the degree of the node, the OSSM 26 may become useless since each power coupler 24 can be directly connected to each WSS 28, but it may also induce too harmful crosstalk in the WSSs 28. Therefore, in order to provide a power efficient add device 8, the number of output ports 24 of the power couplers 25 is smaller than the degree of the node. The number of output ports 24 on each power coupler 25 determines the maximum number of nodes to which the respective superchannel transmitter 10 may allocate its resources. Moreover, this reduced number of output ports 25 compared to the number of possible destination nodes reduces the crosstalk contribution in the node.

For instance, 1x3 or 1x4 power couplers 24 may be used instead of 1x8 for an 8-degree node. As a consequence, the superchannels are not broadcast to all the WSSs 28 of the add-device 8 and the signals emitted by each superchannel transmitter 10 are only steered to each direction they are destined to by the OSSM 26.

In a variant of the above described node, the node may have a 8-degree connectivity and twenty transmitters for each add-device 8 so as to get a fair cost per transponder for each add-device 8. Therefore, the add-device 8 comprises eight 1x20 WSSs (one WSS per node degree) and the OSSM 26 is connected to the WSSs by 8x20=160 output ports. On the transmitter side 44, the OSSM is connected for instance by 20x3=60 input ports to the power couplers, if the number of destination node per transmitter 10 is limited to 3, or for instance 20x4=80 input ports if the number of destination node per transmitter 10 is limited to 4.

The cost of an OSSM depends on the size of the OSSM and notably on the sum of the number of ports on both sides of the OSSM.

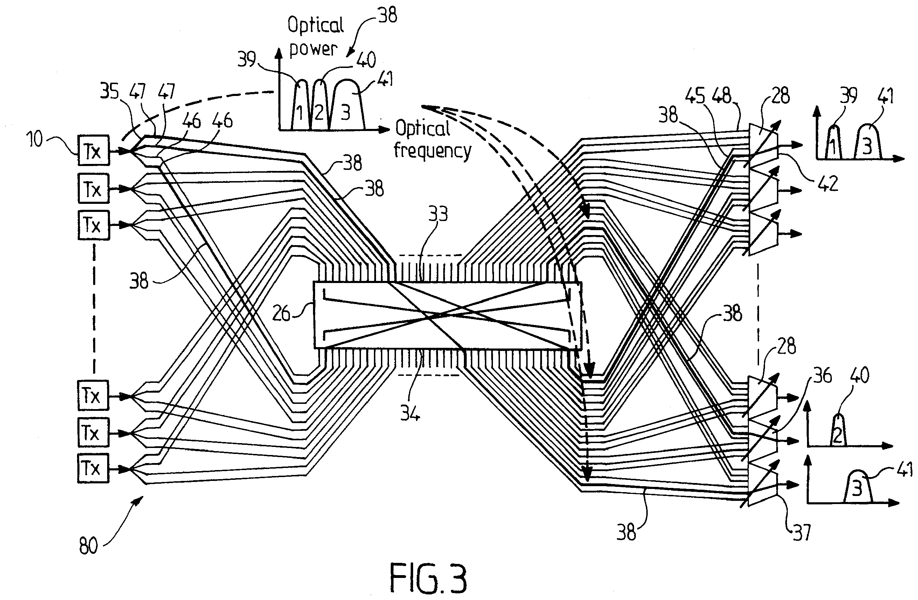

Figure 3 illustrates an add-device 80 with an architecture that enables to use a smaller OSSM 26 compared to the add device 8 described in figure 2.

The add-device 80 presented in figure 3 is similar to the add-device 8 presented in figure 2. However, the power couplers 35 distribute the superchannel emitted by the transmitters 10 at four outputs 47 and 46. For each power coupler 35, two outputs 47 are connected to a first side 33 of the OSSM and the two other outputs 46 are connected to the second side 34 of the OSSM. Furthermore, a half of the inputs 48 of each WSS 28 are connected to the first OSSM side 33 and the other half of the inputs 45 are connected to the second side 34.

Such a configuration, where power couplers 35 and WSSs 28 are connected on each side 33 and 34 of the OSSM 26 so as to balance the number of connected ports on each side 33 and 34, enables to reduce the size of the OSSM 26 and therefore the cost of the OSSM 26. For instance, turning back to the example of a 8-degree node with twenty transmitters 10, instead of needing an OSSM 26 having 160 port on one side and 60 ports on the other side, with the configuration of figure 3, the add-device only need a OSSM 26 having 110 ports on each side 33 and 34. Indeed, 80 inputs 48 and 30 outputs 47 are connected to the side 33, and the side 34 is symmetrical to the side 33. As the OSSM 26 size is smaller than 129x129, this 8-degree node is economical.

An example of a superchannel 38 distributed to several nodes is illustrated on figure 3. An initial superchannel 38 is emitted from a transmitter 10 and comprises three subcarriers 39, 40 and 41 corresponding to different wavelength channels. Subcarrier 39 should be transmitted from WSS 42 to the associated node, subcarrier 40 should be transmitted from WSS 36 and subcarrier 41 should be transmitted from WSSs 37 and 42 towards respective destination nodes.

The initial signal 38 is broadcast by a power splitter 35. The OSSM sends the initial superchannel 38 to the input ports of the intended WSSs 36, 37 and 42. Each WSS filters out the subcarriers which do not need to be transmitted in order to keep only the subcarriers which are intended to be transmitted to the node connected to the respective WSS 28. Therefore, WSS 42 filters out subcarrier 40, WSS 36 filters out subcarriers 39 and 41 and WSS 37 filters out subcarriers 39 and 40.

The add-devices 8 and 80 shown in figures 2 and 3 enable to transmit a same optical signal on a wavelength channel to different directions and therefore enable a better protection of the WDM signals in the optical domain.

Moreover, if the number of transmitters 10 connected to the OSSM 26 is smaller or equal to the number of ports of each WSS connected to the OSSM 26, the add-device 8 or 80 is contentionless. However, it is also possible to connect more transmitters if some contention may be accepted. Nevertheless, in a preferred embodiment, the OSSM ports on each side 33 and 34 or 43 and 44 should remain smaller than or equal to 128 so as to be economical. For instance an add-device 80 may comprise twenty-four superchannel transmitters connected to 1x4 power couplers and eight 1x20 WSS.

A drop device 9 having a similar architecture than the above mentioned add-devices can be designed by substituting the transmitters 10 with receivers 11 in figures 2 and 3. Such a drop device 9 may be implemented in a node similar to the node illustrated in figure 1.

A superchannel coming from a source node is filtered in the WSS operating as a demultiplexer in order to select respective optical signals of the superchannel. The selected optical signals at each WSS output are transmitted to a respective receiver adapted to receive superchannels through an OSSM and a power coupler which may combine optical signals sent from several WSSs. Therefore, one superchannel receiver 11 can be used to demodulate the optical signals received on respective wavelength channels from different nodes.

Such a superchannel receiver is used for instance in "Wavelength-based Sub-carrier Multiplexing and Grooming for Optical Networks Bandwidth Virtualization" by Wei Wei et al. This kind of receiver uses a structure called Parallel Signal Detection (PSD) and can receive multiple non-overlapping baseband signals at different wavelengths simultaneously. Indeed, the signals received should comprise different wavelength and non overlapping sub carriers to avoid interferences.

The invention is not limited to the described embodiments. The appended claims are to be construed as embodying all modification and alternative constructions that may be occurred to one skilled in the art, which fairly fall within the basic teaching here, set forth. The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1. A multidirectional add-device for an optical network element, comprising:
a group of optical transmitters,
a group of broadcasting units (24, 35), each broadcasting unit comprising a WDM input connected to the WDM output of a respective optical transmitter, each broadcasting unit comprising at least two WDM outputs (25),
a plurality of multiplexers,
an optical switching matrix (26) comprising a set of WDM input ports each connected to a respective output of a broadcasting unit (25) and a set of WDM output ports (27) each connected to the multiplexers (28),
each of said multiplexers comprising a plurality of WDM inputs each connected to a respective output port (27) of the optical switching matrix,
**characterized in that** each optical transmitter is a superchannel optical transmitter (10) adapted to transmit a superchannel comprising a plurality of optical signals on a plurality of wavelength channels,
wherein each multiplexer is a Wavelength Selective Switch, WSS, (28) operating as programmable multiplexer, wherein each WDM input of the WSS connected to an output port (27) of the optical switching matrix is adapted to receive at least one superchannel from the superchannel transmitters, each WSS (28) comprising a WDM output (21) and being adapted to filter the at least one received superchannel so as to output a selected subset of the optical signals of the at least one superchannel.

2. A multidirectional add-device according to claim 1, wherein the WDM ports of the optical switching matrix are distributed on two sides, the optical switching matrix being adapted to generate connections between the ports of the first side and the ports of the second side, wherein the input ports are all located on the first side and the output ports are all located on the second side.

3. A multidirectional add-device according to claim 1, wherein the WDM ports of the optical switching matrix are distributed on two sides, the optical switching matrix being adapted to generate connections between the ports of the first side and the ports of the second side,
wherein the first side comprises a first subset of the input ports and a first subset of the output ports,
wherein the second side comprises a second subset of the input ports and a second subset of the output ports,
wherein the optical switching matrix generates connections between the first subset of the input ports and the second subset of the output ports, and between the second subset of the input ports and the first subset of the output ports.

4. A multidirectional add-device according to claim 3, wherein a first WDM output (25) of each of the broadcasting units is connected to an input port of the first subset and a first WDM input of each WSS is connected to an output port of the first subset, and a second WDM output (25) of each of the broadcasting unit is connected to an input port in the second subset and a second WDM input of each WSS is connected to an output port of the second subset.

5. A multidirectional add-device according to claim 3 or 4, wherein the number of WDM outputs of each of the broadcasting units connected to the first side (34) is equal to the number of WDM outputs of said broadcasting units connected to the second side (33) and the number of WDM inputs of each of the WSSs connected to the first side (34) is equal to the number of WDM inputs of said WSSs connected to the second side (33).

6. A multidirectional add-device according to any one of claims 1 to 5, wherein a broadcasting unit comprises a number of outputs which is smaller than the number of WSSs (28).

7. A multidirectional add-device according to any one of claims 1 to 6, wherein the broadcasting units are optical splitters.

8. A multidirectional add-device according to any one of claims 1 to 7, wherein the optical signals of a superchannel are generated using a method selected in the group consisting of Orthogonal Frequency Division Multiplexing, Coherent Wavelength Division Multiplexing, Parallel Optical Arbitrary Waveform Generation and Nyquist-Wavelength Division Multiplexing.

9. A multidirectional add-device according to any one of claims 1 to 8, wherein each WSS comprises a number of WDM inputs connected to respective output ports of the optical switching matrix which is smaller or equal to the number of superchannel transmitters in the group of superchannel transmitters.

10. A multidirectional add-device according to any one of claims 1 to 9, wherein the number of superchannel optical transmitters (10) is higher than the number of WDM inputs connected to the optical switching matrix of each WSS.

11. A network element comprising:
a plurality of WDM output lines (4),
an add-device in accordance with claim 1, and
a plurality of WDM add links (19) each connecting a WSS (28) of the add-device to a respective one of the output lines (4).

12. A multidirectional drop device for an optical network element, comprising:
a group of optical receivers,
a group of coupling units, each optical receiver comprising a WDM input connected to the WDM output of a respective coupling unit, each coupling unit comprising at least two WDM inputs,
a plurality of demultiplexers,
an optical switching matrix comprising a set of WDM output ports each connected to a respective input of a broadcasting unit and a set of WDM input ports connected to the demultiplexers (28),
each of said demultiplexers comprising a plurality of WDM outputs each connected to a respective input port (27) of the optical switching matrix to transmit at least one optical signal to the optical receivers,
**characterized in that** each optical receiver is a superchannel optical receiver (11) adapted to receive a superchannel comprising a plurality of optical signals on a plurality of wavelength channels,
wherein each demultiplexer is a Wavelength Selective Switch, WSS, (28) operating as a programmable demultiplexer,
each WSS (28) comprising a WDM input (21) for receiving at least one superchannel comprising a plurality of optical signals on a plurality of wavelength channels, the WSS being adapted to filter the superchannel so as to output a selected subset of the optical signals at each of the WDM outputs of the WSS.

## Patentansprüche

1. Multidirektionale Add-Vorrichtung für ein optisches Netzelement, umfassend:
eine Gruppe optischer Sender,
eine Gruppe von Sendeeinheiten (24, 35), wobei jede Sendeeinheit einen WDM-Eingang umfasst, der mit dem WDM-Ausgang eines entsprechenden optischen Senders verbunden ist, wobei jede Sendeeinheit mindestens zwei WDM-Ausgänge (25) umfasst,
eine Vielzahl von Multiplexern,
eine optische Schaltmatrix (26), einen Satz von WDM-Eingangsports umfassend, jeder von ihnen verbunden mit einem entsprechenden Ausgang einer Sendeeinheit (25), und einem Satz von WDM-Ausgangsports (27) umfassend, von denen jeder mit den Multiplexern (28) verbunden ist,
wobei jeder der besagten Multiplexer eine Vielzahl von WDM-Eingängen umfasst, von denen jeder mit einem entsprechenden Ausgangsport (27) der optischen Schaltmatrix verbunden ist,
**dadurch gekennzeichnet, dass** jeder optische Sender ein optischer Superkanal-Sender (10) ist, der ausgelegt ist für das Senden eines Superkanals, der eine Vielzahl optischer Signale auf einer Vielzahl von Wellenlängenkanälen umfasst,
wobei jeder Multiplexer ein wellenlängenselektiver Schalter (Wavelength Selective Switch, WWS, 28) ist, der als programmierbarer Multiplexer betrieben wird, wobei jeder WDM-Eingang des WSS, der mit einem Ausgangsport (27) der optischen Schaltmatrix verbunden ist, ausgelegt ist für den Empfang von mindestens einem Superkanal von den Superkanal-Sendern, wobei jeder WSS (28) einen WDM-Ausgang (21) umfasst und ausgelegt ist für das dergestaltige Filtern des mindestens einen empfangenen Superkanals, dass er einen ausgewählten Teilsatz der optischen Signale des mindestens einen Superkanals ausgibt.

2. Multidirektionale Add-Vorrichtung nach Anspruch 1, wobei die WDM-Ports der optischen Schaltmatrix auf zwei Seiten angeordnet sind, wobei die optische Schaltmatrix ausgelegt ist für das Generieren von Verbindungen zwischen den Ports auf der ersten Seite und den Ports auf der zweiten Seite, wobei die Eingangsports durchweg auf der ersten Seite und die Ausgangsports durchgehend auf der zweiten Seite angeordnet sind.

3. Multidirektionale Add-Vorrichtung nach Anspruch 1, wobei die WDM-Ports der optischen Schaltmatrix auf zwei Seiten angeordnet sind, wobei die optische Schaltmatrix ausgelegt ist für das Generieren von Verbindungen zwischen den Ports auf der ersten Seite und den Ports auf der zweiten Seite,
wobei die erste Seite einen ersten Teilsatz der Eingangsports und einen ersten Teilsatz der Ausgangsports umfasst,
wobei die zweite Seite einen zweiten Teilsatz der Eingangsports und einen zweiten Teilsatz der Ausgangsports umfasst,
wobei die optische Schaltmatrix Verbindungen zwischen dem ersten Teilsatz der Eingangsports und dem zweiten Teilsatz der Ausgangsports sowie zwischen dem zweiten Teilsalz der Eingangsports und dem ersten Teilsatz der Ausgangsports generiert.

4. Multidirektionale Add-Vorrichtung nach Anspruch 3, wobei ein erster WDM-Ausgang (25) einer jeden der Sendeeinheiten mit einem Eingangsport des ersten Teilsatzes und ein erster WDM-Eingang eines jeden WSS mit einem Ausgangsport des ersten Teilsatzes verbunden ist, und wobei ein zweiter WDM-Ausgang (25) einer jeden der Sendeeinheiten mit einem Eingangsport in dem zweiten Teilsatz und ein zweiter WDM-Eingang eines jeden WSS mit einem Ausgangsport des zweiten Teilsatzes verbunden ist.

5. Multidirektionale Add-Vorrichtung nach Anspruch 3 oder 4, wobei die Anzahl der WDM-Ausgänge einer jeden der mit der ersten Seite (34) verbundenen Sendeeinheiten der Anzahl der WDM-Ausgänge der besagten, mit der zweiten Seite (33) verbundenen Sendeeinheiten entspricht, und wobei die Anzahl der WDM-Eingänge eines jeden der mit der ersten Seite (34) verbundenen WSS der Anzahl der WDM-Eingänge der besagten WSS entspricht, die mit der zweiten Seite (33) verbunden sind.

6. Multidirektionale Add-Vorrichtung nach einem jeglichen der Ansprüche 1 bis 5, wobei eine Sendeeinheit eine Anzahl von Ausgängen umfasst, die kleiner ist als die Anzahl der WSS (28).

7. Multidirektionale Add-Vorrichtung nach einem jeglichen der Ansprüche 1 bis 6, wobei die Sendeeinheiten optische Splitter sind.

8. Multidirektionale Add-Vorrichtung nach einem jeglichen der Ansprüche 1 bis 7, wobei die optischen Signale eines Superkanals unter Verwendung eines Verfahrens generiert werden, das aus einer Gruppe ausgewählt wird, welche gebildet wird von den Verfahren Orthogonal Frequency Division Multiplexing, Coherent Wavelength Division Multiplexing, Parallel Optical Arbitrary Waveform Generation und Nyquist-Wavelength Division Multiplexing.

9. Multidirektionale Add-Vorrichtung nach einem jeglichen der Ansprüche 1 bis 8, wobei jeder WSS eine Anzahl von WDM-Eingängen umfasst, die mit entsprechenden Ausgangsports der optischen Schaltmatrix verbunden sind, wobei besagte Anzahl kleiner oder gleich der Anzahl von Superkanalsendern in der Gruppe der Superkanalsender ist.

10. Multidirektionale Add-Vorrichtung nach einem jeglichen der Ansprüche 1 bis 9, wobei die Anzahl der optischen Superkanal-Sender (10) größer ist als die Zahl der WDM-Eingänge, die mit der optischen Schaltmatrix eines jeden WSS verbunden sind.

11. Netzwerkelement, umfassend:
eine Vielzahl von WDM-Ausgangsleitungen (4),
eine Add-Vorrichtung nach Anspruch 1, und
eine Vielzahl von WDM-Add-Links (19), jeder von ihnen einen WSS (28) der Add-Vorrichtung mit einem entsprechenden der Ausgangsleitungen (4) verbindend.

12. Multidirektionale Drop-Vorrichtung für ein optisches Netzelement, umfassend:
eine Gruppe optischer Empfänger,
eine Gruppe von Kopplungseinheiten, wobei jeder optische Empfänger einen WDM-Eingang umfasst, der mit dem WDM-Ausgang einer entsprechenden Kopplungseinheit verbunden ist, wobei jede Kopplungseinheit mindestens zwei WDM-Eingänge umfasst,
eine Vielzahl von Demultiplexern,
eine optische Schaltmatrix, einen Satz von WDM-Ausgangsports umfassend, jeder von ihnen verbunden mit einem entsprechenden Eingang einer Sendeeinheit und einem Satz von WDM-Eingangsports, die mit den Demultiplexern (28) verbunden sind,
wobei jeder der besagten Demultiplexer eine Vielzahl von WDM-Ausgängen umfasst, jeder von ihnen verbunden mit einem entsprechenden Eingangsport (27) der optischen Schaltmatrix, um mindestens ein optisches Signal an die optischen Empfänger zu übermitteln,
**dadurch gekennzeichnet, dass** jeder optische Empfänger ein optischer Superkanal-Empfänger (11) ist, der ausgelegt ist für das Empfangen eines Superkanals, der eine Vielzahl optischer Signale auf einer Vielzahl von Wellenlängenkanälen umfasst, wobei jeder Demultiplexer ein Wellenlängenselektiver Schalter (WSS. 28) ist, der als programmierbarer Demultiplexer betrieben wird,
wobei jeder WSS (28) einen WDM-Eingang (21) für den Empfang mindestens eines Superkanals umfasst, der eine Vielzahl von optischen Signalen auf einer Vielzahl von Wellenlängenkanälen umfasst, wobei der WSS ausgelegt ist für das dergestaltige Filtern des Superkanals, dass er an jedem der WDM-Ausgänge der WSS einen ausgewählten Teilsatz optischer Signale ausgibt.

## Revendications

1. Dispositif d'insertion multidirectionnel pour un élément de réseau optique, comprenant :
un groupe d'émetteurs optiques,
un groupe d'unités de diffusion (24, 35), chaque unité de diffusion comprenant une entrée MRL connectée à la sortie MRL d'un émetteur optique respectif, chaque unité de diffusion comprenant au moins deux sorties MRL (25),
une pluralité de multiplexeurs,
une matrice de commutation optique (26) comprenant un ensemble de ports d'entrée MRL tous connectés à une sortie respective d'une unité de diffusion (25) et un ensemble de ports de sortie MRL (27) tous connectés aux multiplexeurs (28),
chacun desdits multiplexeurs comprenant une pluralité d'entrées MRL toutes connectées à un port de sortie (27) respectif de la matrice de commutation optique,
**caractérisé en ce que** chaque émetteur optique est un émetteur optique de supercanal (10) adapté pour transmettre un supercanal comprenant une pluralité de signaux optiques sur une pluralité de canaux de longueur d'onde,
dans lequel chaque multiplexeur est un commutateur sélectif en longueur d'onde, WSS (28), fonctionnant comme un multiplexeur programmable, dans lequel chaque entrée MRL du WSS connectée à un port de sortie (27) de la matrice de commutation optique est adaptée pour recevoir au moins un supercanal provenant des émetteurs de supercanal, chaque WSS (28) comprenant une sortie MRL (21) et étant adapté pour filtrer l'au moins un supercanal reçu de sorte à délivrer en sortie un sous-ensemble sélectionné des signaux optiques de l'au moins un supercanal.

2. Dispositif d'insertion multidirectionnel selon la revendication 1, dans lequel les ports MRL de la matrice de commutation optique sont répartis sur deux côtés, la matrice de commutation optique étant adaptée pour générer des connexions entre les ports du premier côté et les ports du deuxième côté, dans lequel les ports d'entrée sont tous situés sur le premier côté et les ports de sortie sont tous situés sur le deuxième côté.

3. Dispositif d'insertion multidirectionnel selon la revendication 1, dans lequel les ports MRL de la matrice de commutation optique sont répartis sur deux côtés, la matrice de commutation optique étant adaptée pour générer des connexions entre les ports du premier côté et les ports du deuxième côté,
dans lequel le premier côté comprend un premier sous-ensemble des ports d'entrée et un premier sous-ensemble des ports de sortie,
dans lequel le deuxième côté comprend un deuxième sous-ensemble des ports d'entrée et un deuxième sous-ensemble des ports de sortie,
dans lequel la matrice de commutation optique génère des connexions entre le premier sous-ensemble des ports d'entrée et le deuxième sous-ensemble des ports de sortie, et entre le deuxième sous-ensemble des ports d'entrée et le premier sous-ensemble des ports de sortie.

4. Dispositif d'insertion multidirectionnel selon la revendication 3, dans lequel une première sortie MRL (25) de chacune des unités de diffusion est connectée à un port d'entrée du premier sous-ensemble et une première entrée MRL de chaque WSS est connectée à un port de sortie du premier sous-ensemble, et une deuxième sortie MRL (25) de chacune des unités de diffusion est connectée à un port d'entrée dans le deuxième sous-ensemble et une deuxième entrée MRL de chaque WSS est connectée à un port de sortie du deuxième sous-ensemble.

5. Dispositif d'insertion multidirectionnel selon la revendication 3 ou 4, dans lequel le nombre de sorties MRL de chacune des unités de diffusion connectées au premier côté (34) est égal au nombre de sorties MRL desdites unités de diffusion connectées au deuxième côté (33) et le nombre d'entrées MRL de chacun des WSS connectées au premier côté (34) est égal au nombre d'entrées MRL desdits WSS connectées au deuxième côté (33).

6. Dispositif d'insertion multidirectionnel selon l'une quelconque des revendications 1 à 5, dans lequel une unité de diffusion comprend un nombre de sorties qui est inférieur au nombre de WSS (28).

7. Dispositif d'insertion multidirectionnel selon l'une quelconque des revendications 1 à 6, dans lequel les unités de diffusion sont des diviseurs optiques.

8. Dispositif d'insertion multidirectionnel selon l'une quelconque des revendications 1 à 7, dans lequel les signaux optiques d'un supercanal sont générés en utilisant un procédé sélectionné dans le groupe constitué du multiplexage par répartition orthogonale de la fréquence, du multiplexage par répartition en longueur d'onde cohérent, de la génération de forme d'onde arbitraire optique parallèle et du multiplexage par répartition en longueur d'onde de Nyquist.

9. Dispositif d'insertion multidirectionnel selon l'une quelconque des revendications 1 à 8, dans lequel chaque WSS comprend un nombre d'entrées MRL connectées à des ports de sortie respectifs de la matrice de commutation optique qui est inférieur ou égal au nombre d'émetteurs de supercanal dans le groupe d'émetteurs de supercanal.

10. Dispositif d'insertion multidirectionnel selon l'une quelconque des revendications 1 à 9, dans lequel le nombre d'émetteurs optiques de supercanal (10) est supérieur au nombre d'entrées MRL connectées à la matrice de commutation optique de chaque WSS.

11. Élément de réseau comprenant :
une pluralité de lignes de sortie MRL (4),
un dispositif d'insertion selon la revendication 1, et
une pluralité de liaisons d'insertion MRL (19) connectant chacune un WSS (28) du dispositif d'insertion à une ligne de sortie respective parmi les lignes de sortie (4).

12. Dispositif d'extraction multidirectionnel pour un élément de réseau optique, comprenant :
un groupe de récepteurs optiques,
un groupe d'unités de couplage, chaque récepteur optique comprenant une entrée MRL connectée à la sortie MRL d'une unité de couplage respective, chaque unité de couplage comprenant au moins deux entrées MRL,
une pluralité de démultiplexeurs,
une matrice de commutation optique comprenant un ensemble de ports de sortie MRL tous connectés à une entrée respective d'une unité de diffusion et un ensemble de ports d'entrée MRL connectés aux démultiplexeurs (28),
chacun desdits démultiplexeurs comprenant une pluralité de sorties MRL toutes connectées à un port d'entrée (27) respectif de la matrice de commutation optique pour transmettre au moins un signal optique aux récepteurs optiques,
**caractérisé en ce que** chaque récepteur optique est un récepteur optique de supercanal (11) adapté pour recevoir un supercanal comprenant une pluralité de signaux optiques sur une pluralité de canaux de longueur d'onde,
dans lequel chaque démultiplexeur est un commutateur sélectif de longueur d'onde, WSS (28) fonctionnant comme un démultiplexeur programmable,
chaque WSS (28) comprenant une entrée MRL (21) pour recevoir au moins un supercanal comprenant une pluralité de signaux optiques sur une pluralité de canaux de longueur d'onde, le WSS étant adapté pour filtrer le supercanal de sorte à délivrer en sortie un sous-ensemble sélectionné des signaux optiques à chacune des sorties MRL du WSS.
